# EUROPÄISCHE PATENTANMELDUNG

(11) **EP 4 088 905 A1**
(43) Veröffentlichungstag der Anmeldung: **16.11.2022**
(21) Anmeldenummer: 22172532.8
(22) Anmeldetag: 10.05.2022
(51) Int. Cl.: B29C 45/26, B29C 45/36

(54) **SPRITZGIESSWERKZEUG MIT EINEM FÜHRUNGSELEMENT UND EINEM KOMPENSATIONSMITTEL**

(30) Priorität: 10.05.2021 DE 102021112147
(71) Anmelder: HACK Formenbau GmbH, 73230 Kirchheim u. Teck (DE)
(72) Erfinder: Pfannenschwarz, André, 73230 Kirchheim unter Teck (DE)
(74) Vertreter: Manitz Finsterwald Patent- und Rechtsanwaltspartnerschaft mbB

(57) **Zusammenfassung**

Die Erfindung bezieht sich auf ein Spritzgießwerkzeug für eine Spritzgießmaschine, welche zwei Formblöcke mit zumindest einer Kavität in einem ersten Formblock umfasst, wobei die Formblöcke in eine geöffnete Stellung und eine geschlossene Stellung bewegbar sind. Außerdem umfasst das Spritzgießwerkzeug zumindest einen Kern, welcher an einem zweiten Formblock befestigt ist, wobei der Kern in der geschlossenen Stellung in die Kavität hineinragt, wobei der Kern und die Kavität in der geschlossenen Stellung einen Formhohlraum bilden. Darüber hinaus umfasst das Spritzgießwerkzeug ein mit dem Kern verbundenes Führungselement, welches in der geschlossenen Stellung an dem ersten Formblock anliegt und die Position des Kerns in der Kavität festlegt, wobei die Position des Kerns in der Kavität in der geschlossenen Stellung mittels des Führungselements veränderbar ist. Schließlich umfasst das Spritzgießwerkzeug ein Kompensationsmittel, mittels welchem die Position der Befestigung des Kerns an dem zweiten Formblock an die Position des Kerns in der Kavität anpassbar ist.

## Beschreibung

Die vorliegende Erfindung betrifft ein Spritzgießwerkzeug mit einem Führungselement und einem Kompensationsmittel. Die Erfindung bezieht sich außerdem auf ein Verfahren zum Betrieb eines Spritzgießwerkzeugs und auf eine Spritzgießmaschine umfassend ein solches Spritzgießwerkzeug.

Spritzgießmaschinen werden beispielsweise für die Herstellung von Kunststoffprodukten und Kunststoffbauteilen verwendet. Im Spritzgießwerkzeug wird dabei flüssiger Kunststoff in Kavitäten von Formblöcken eingespritzt, wobei die Kavitäten Formhohlräume bilden, welche die Form des herzustellenden Bauteils bzw. Spritzlings festlegen. Auf diese Weise ist es möglich eine Vielzahl von unterschiedlichen Bauteilen/Spritzlingen herzustellen. Vor allem bei der Herstellung von kleinen und filigranen Spritzlingen ist häufig eine hohe Präzision gefordert, da kleinste Abweichungen der Bauteilmaße zur Unbrauchbarkeit des Spritzlings führen können oder die Funktion des Spritzlings stark beeinträchtigen.

Im Hinblick auf die Präzision der Spritzgießmaschine sind die Formhohlräume von entscheidender Bedeutung. Bei der Herstellung von Kunststoffbauteilen welche einen Hohlraum aufweisen, wie z.B. Pipetten, Probenröhrchen und dergleichen umfasst in der Regel einer der Formblöcke Kavitäten, während der andere Formblock in die Kavitäten einfahrende Kerne umfasst. Kavitäten und Kerne bilden gemeinsam im geschlossenen Zustand der Formblöcke einen Formhohlraum. Der Teil des Kerns, welcher in die Kavität hineinragt, auch Kernspitze genannt, kann dabei filigran ausgebildet sein. Daher kann es beim Einspritzvorgang vorkommen, dass die Kernspitze durch den Druck des einspritzenden Kunststoffs unerwünschter Weise in eine Richtung gebogen oder verschoben wird, sodass die Form des Spritzlings verändert wird. Insbesondere kann das dazu führen, dass die Wandstärken des Spritzlings verändert werden, sodass der Spritzling beispielsweise eine zu geringe Wandstärke in einem Bereich aufweist.

Eine Aufgabe der vorliegenden Erfindung ist es daher, ein verbessertes Spritzgießwerkzeug für eine Spritzgießmaschine bereitzustellen, welches es gestattet auch filigrane Spritzlinge mit gleichbleibender Qualität herzustellen.

Diese Aufgabe wird durch den Gegenstand des Anspruchs 1 gelöst.

Das erfindungsgemäße Spritzgießwerkzeug für eine Spritzgießmaschine umfasst:
- zwei Formblöcke mit zumindest einer Kavität in einem ersten Formblock, wobei die Formblöcke in eine geöffnete Stellung und eine geschlossene Stellung bewegbar sind,
- zumindest einen Kern, welcher an einem zweiten Formblock befestigt oder angebracht ist, wobei der Kern in der geschlossenen Stellung in die Kavität hineinragt, wobei der Kern und die Kavität in der geschlossenen Stellung einen Formhohlraum bilden,
- ein mit dem Kern verbundenes Führungselement, welches in der geschlossenen Stellung an dem ersten Formblock anliegt und die Position des Kerns in der Kavität festlegt, wobei die Position des Kerns in der Kavität in der geschlossenen Stellung mittels des Führungselements veränderbar ist,
   - ein Kompensationsmittel, mittels welchem die Position der Befestigung des Kerns an dem zweiten Formblock an die Position des Kerns in der Kavität anpassbar ist.

Mit anderen Worten wird mittels der zwei Formblöcke und insbesondere mittels zumindest einer Kavität des ersten Formblocks und mittels zumindest eines Kerns des zweiten Formblocks in einer geschlossenen Stellung ein Formhohlraum gebildet, in den flüssiger Kunststoff gespritzt wird, wobei der Kern in der geschlossenen Stellung in die Kavität hineinragt. Mittels des Führungselements kann eine durch das Einspritzen entstehende Verschiebung der Position des Kerns ausgeglichen werden, indem die Position des Kerns (z.B. zwischen zwei Einspritzvorgängen) so verschoben wird, dass die durch das Einspritzen entstandene Verschiebung ausgeglichen wird. Mittels des Kompensationsmittels kann anschließend die Position der Befestigung des Kerns an dem zweiten Formblock an die (neue) Position des Kerns in der Kavität angepasst werden. Eine auf das Führungselement und den Kern wirkende Kraft, welche durch die Verschiebung des Kerns nur mittels des Führungselements auftreten würde, kann dadurch reduziert oder sogar ganz eliminiert werden.

Zur Herstellung des Spritzlings wird der Kunststoff, welcher ursprünglich in Form von Kunststoffgranulat vorliegt, über eine Heizkanaldüse (weiter) erhitzt und über Einspritzdüsen in das erfindungsgemäße Spritzgießwerkzeug gespritzt. Der Kunststoff füllt dann den Formhohlraum bevorzugt vollständig aus. Beispielsweise kann eine im Kern integrierte Kühlung den Spritzling abkühlen bis der flüssige Kunststoff sich zumindest teilweise verfestigt hat. Um den fertigen, abgekühlten Spritzling aus dem Formhohlraum zu entnehmen sind die beiden Formblöcke relativ zueinander verfahrbar, sodass die beiden Formblöcke von einer geschlossenen Stellung in eine geöffnete Stellung verfahren werden können und umgekehrt. Durch das Verfahren der Formblöcke von der geschlossenen Stellung in die offene Stellung kann Spritzling aus dem Formhohlraum ausgeworfen werden.

Die Position des Kerns in der geschlossenen Stellung kann erfindungsgemäß somit so verändert werden, dass die Verschiebung des Kerns, welche durch das Einspritzen des Kunststoffs entsteht, kompensiert wird. Durch die Kompensation kann die Wandstärke eines nach der Kompensation hergestellten Spritzlings wieder der gewünschten Wandstärke bzw. dem gewünschten Maß entsprechen (trotz einer eventuellen Verformung des Kerns durch den eingespritzten Kunststoff). Die Position des Kerns wird also beispielsweise so verändert, dass eine gleichmäßige Wandstärke erreicht wird.

Das Führungselement kann im geschlossenen Zustand an dem ersten Formblock anliegen, wobei Kräfte auf das Führungselement wirken, welche durch die Kompensation der Verschiebung bedingt sind und welche zu Verscheißeffekten am Führungselement und/oder am Kern führen würden. Aus diesem Grund ist erfindungsgemäß ein Kompensationsmittels vorgesehen, mittels welchem die Position der Befestigung des Kerns an dem zweiten Formblock an die Position des Kerns in der Kavität anpassbar ist. Mit anderen Worten wird die Position der Befestigung des Kerns bevorzugt um die Verschiebung des Kerns durch das Führungselement verändert. Dies hat zur Folge, dass die auf das Führungselement und indirekt auf den Kern wirkende Kraft reduziert oder eliminiert wird und somit der einhergehende Verschleiß am Führungselement und am Kern reduziert wird. Insbesondere wird eine unveränderbare Befestigung des Kerns am zweiten Formblock aufgegeben, um dadurch eine Verformung des Kerns durch das Führungselement und eine verschleißträchtige Krafteinwirkung auf das Führungselement zu vermeiden.

Weitere Ausführungsformen der Erfindung sind der Beschreibung, den Unteransprüchen sowie den Zeichnungen zu entnehmen.

Gemäß einer ersten Ausführungsform umfasst das Führungselement eine erste Exzenterbuchse, wobei eine Außenfläche der ersten Exzenterbuchse bevorzugt konisch zuläuft. Insbesondere kann sich der Kern durch die erste Exzenterbuchse hindurch erstrecken. In diesem Fall kann die erste Exzenterbuchse einen Hohlraum umfassen durch den sich der Kern erstreckt. Die erste Exzenterbuchse kann durch eine jeweilige Dreh-Position bzw. Stellung der ersten Exzenterbuchse in eine Richtung verschoben bzw. versetzt werden. Die durch das Führungselement (d.h. die erste Exzenterbuchse) festgelegte Position des Kerns kann somit auf einfache Weise verändert werden, indem die erste Exzenterbuchse gedreht wird. Insbesondere kann die Position des Kerns durch die Drehung der ersten Exzenterbuchse in eine beliebige Richtung senkrecht zu einer Drehachse der ersten Exzenterbuchse verändert werden.

Die erste Exzenterbuchse kann eine röhrenförmige Innenkontur mit insbesondere kreisförmigem Querschnitt aufweisen, welche bevorzugt konzentrisch verläuft, während die Exzenterbuchse eine Außenkontur aufweisen kann, welche bevorzugt exzentrisch verläuft (relativ zur Innenkontur). Der Kern kann an der Innenkontur anliegen. Die erste Exzenterbuchse kann einen Konus an ihrer Außenkontur ausbilden. Der Konus läuft bevorzugt in eine Richtung des von dem zweiten Formblocks abgewandten Ende des Kerns hin zu und liegt in der geschlossenen Stellung an dem ersten Formblock an. Insbesondere kann der Konus in der geschlossenen Stellung derart an dem ersten Formblock anliegen, sodass die Position des Konus und damit der ersten Exzenterbuchse und des Kerns festgelegt sind.

Die maximale Verschiebung des Kerns durch das Führungselement bzw. die erste Exzenterbuchse kann weniger als 0,05mm oder weniger als 0,03mm, bevorzugt weniger als 0,02mm, 0,01mm oder sogar 0,005mm betragen.

Alternativ kann statt der ersten Exzenterbuchse auch jede andere geeignete Vorrichtung zum Verschieben des Kerns verwendet werden. Beispielsweise kann die Position des Kerns mit einem anderen mechanischen Bauteil, z.B. mittels einschiebbaren Elementen oder Keilen und dergleichen, oder auch mittels einer elektrischen und/oder pneumatischen Verschiebevorrichtung verändert werden.

Gemäß einer weiteren Ausführungsform umfasst das Kompensationsmittel eine zweite Exzenterbuchse. Der Kern kann sich zumindest teilweise in die zweite Exzenterbuchse hinein erstrecken. Die zweite Exzenterbuchse kann ein Ende des Kerns auf der Seite des zweiten Formblocks bilden oder zumindest an diesem Ende angeordnet sein. Alternativ kann sich der Kern auch durch die zweite Exzenterbuchse hindurch erstrecken. Darüber hinaus kann die zweite Exzenterbuchse eine Befestigungsposition für den Kern am zweiten Formblock definieren. Insbesondere kann der Kern über die zweite Exzenterbuchse an dem zweiten Formblock zumindest teilweise befestigt sein.

Die maximale Verschiebung des Kerns durch das Kompensationsmittel bzw. die zweite Exzenterbuchse kann weniger als 0,05mm oder weniger als 0,03mm, bevorzugt weniger als 0,02mm, 0,01mm oder sogar 0,005mm betragen.

Die erste und/oder zweite Exzenterbuchse können jeweils eine im Querschnitt kreisförmige Außenkontur und Innenkontur aufweisen. Die Innenkontur kann ein Durchgangsloch umfassen, welches außermittig in die erste und/oder zweite Exzenterbuchse eingebracht sein kann. Der Kern erstreckt sich bevorzugt jeweils durch das Durchgangsloch (d.h. die Innenkontur) hindurch. Durch die Drehung der ersten und/oder zweiten Exzenterbuchse kann so die Position des durch das Durchgangsloch laufenden Kerns in der ersten und/oder zweiten Exzenterbuchse verschoben werden.

Die erste Exzenterbuchse und somit auch das Führungselement kann auch eine im Querschnitt nicht-kreisförmige Innen- und/oder Außenkontur aufweisen. Dasselbe gilt für das Kompensationsmittel und die zweite Exzenterbuchse. Beispielsweise kann die Innen- und/oder Außenkontur von Führungselement und/oder Kompensationsmittel einen sechseckigen, achteckigen oder allgemein polygonen Querschnitt umfassen. Bevorzugt ist der Querschnitt regelmäßig geformt, z.B. als regelmäßiges Sechseck, Achteck oder Polygon. Der Kern kann im Bereich des Führungselements und/oder des Kompensationsmittels eine Außenkontur aufweisen, die der Innenkontur des Führungselements und/oder des Kompensationsmittels entspricht.

Das Führungselement und das Kompensationsmittel können jeweils eine Nullposition aufweisen, in welcher der Kern eine Position einnimmt, die keine Verschiebung aufweist. Sind das Führungselement und das Kompensationsmittel in der Nullposition kann der Kern z.B. an seiner planmäßigen Position in der Kavität positioniert sein. Sofern später eine Verschiebung des Kerns notwendig wird, können das Führungselement und/oder das Kompensationsmittel die Nullposition verlassen (z.B. durch Drehen der Exzenterbuchsen) und den Kern dadurch bewegen bzw. versetzen.

Gemäß einer weiteren Ausführungsform weist die Kavität einen Führungsbereich auf und liegt das Führungselement zumindest im geschlossenen Zustand an dem Führungsbereich an. Der Führungsbereich der Kavität kann die gleiche Form wie das Führungselement oder eine komplementäre Form zum Führungselement aufweisen, wobei der Führungsbereich bevorzugt eine konische Form aufweist. Die Form des Führungsbereichs ist nicht beschränkt auf die hier genannten. Der Führungsbereich kann auch jede andere geeignete Form annehmen. Das Führungselement und der Führungsbereich liegen im geschlossenen Zustand bevorzugt flächig und/oder umlaufend aneinander an. Durch das Anliegen des Führungselements an dem Führungsbereich wird die Position des Führungselements im ersten Formblock im geschlossenen Zustand festgelegt, wodurch auch die Position des Kerns festgelegt ist.

Gemäß einer weiteren Ausführungsform weist der erste Formblock mehrere Kavitäten und der zweite Formblock mehrere Kerne auf, wobei jeweils ein Kern in eine Kavität in der geschlossenen Stellung hineinragt und wobei für jeden Kern ein separates mit dem Kern verbundenes Führungselement und ein separates Kompensationsmittel vorgesehen ist. Folglich kann die Position jedes Kerns über das Führungselement und das Kompensationsmittel relativ zur jeweiligen Kavität verändert werden. Beispielsweise kann der erste Formblock eine erste und eine zweite Kavität aufweisen und der zweite Formblock einen ersten und einen zweiten Kern. Beim Einspritzvorgang kann der erste Kern eine stärkere ungewünschte Verschiebung erfahren, während der zweite Kern keine Verschiebung erfährt. In einem solchen Fall ist es notwendig, dass die Kerne individuell verschoben werden können. Beispielsweise kann der erste Kern mit der ersten und zweiten Exzenterbuchse des ersten Kerns verschoben werden, während der zweite Kern keine korrigierende Verschiebung benötigt. Separate Führungselemente und Kompensationsmittel führen somit zu einer erhöhten Flexibilität beim Fertigungsprozess. Die vorangehenden und nachstehenden Ausführungsformen gelten jeweils auch für die Ausführungsform mit mehreren Kavitäten und Kernen.

Gemäß einer weiteren Ausführungsform weist das Führungselement eine Abstreiferbuchse auf, welche zumindest bereichsweise innerhalb der ersten Exzenterbuchse angeordnet ist. Insbesondere kann der Kern durch die Abstreiferbuchse hindurch verlaufen, sodass zwischen der ersten Exzenterbuchse und dem Kern die Abstreiferbuchse positioniert ist. Die Abstreiferbuchse dient dabei dazu, beim Verfahren der Formblöcke von der geschlossenen Position in die geöffnete Position den Spritzling vom Kern herunterzuschieben, d.h. abzustreifen. Beispielsweise kann der Kern relativ zu der Abstreiferbuchse verfahren und somit ein herunterfallen des Spritzlings provozieren. Die Abstreiferbuchse weist bevorzugt einen kreisförmigen Querschnitt ihrer Innenseite auf und ist im Bereich des Führungsbereichs innen konisch ausgebildet, wobei der konische Verlauf der Innenseite der Abstreiferbuchse dem konischen Verlauf des Konus des Exzenters entspricht.

Gemäß einer weiteren Ausführungsform ist der Führungsbereich konisch zulaufend ausgebildet und liegt die erste Exzenterbuchse in der geschlossenen Stellung flächig und umlaufend an dem Führungsbereich an. Wie oben bereits erwähnt, kann auf diese Weise die Position des Führungselements und damit des Kerns relativ zu der Kavität festgelegt werden.

Gemäß einer weiteren Ausführungsform verjüngt sich der Kern im Bereich des Führungselements. Weiterhin kann der Kern direkt mit dem Kompensationsmittel und/oder dem Führungselement verbunden sein. Insbesondere hat der Kern die geringste Querschnittsfläche in dem Bereich, der in die Kavität hineinragt. Eine größte Querschnittsfläche kann der Kern hingegen in einem Bereich des Kompensationsmittels aufweisen. Folglich ist die Querschnittsfläche des Kerns in einem Bereich vom Führungselement bis hin zur zweiten Exzenterbuchse größer als in einem Bereich, welcher in die Kavität hineinragt.

Gemäß einer weiteren Ausführungsform sind das Führungselement und/oder das Kompensationsmittel drehbar um den Kern. Insbesondere kann durch eine Drehung des Führungselements und/oder des Kompensationsmittels der Kern um einen gewünschten Wert in eine gewünschte Richtung verschoben werden. Bei der Drehung des Führungselements und/oder des Kompensationsmittels verändert sich beispielsweise die partielle Dicke der ersten und/oder zweiten Exzenterbuchse an einer jeweiligen Stelle. Somit kann die Position des Kerns eingestellt bzw. angepasst werden. Die Drehung des Führungselements und des Kompensationsmittels kann dabei um einen gleichen oder unterschiedlichen Winkel erfolgen, wobei die Drehung bevorzugt so erfolgt, dass die Verschiebung des Kerns durch das Führungselement gleich der Verschiebung des Kerns durch das Kompensationsmittel ist.

Ein weiterer Aspekt der vorliegenden Erfindung bezieht sich auf ein Verfahren zum Betrieb eines Spritzgießwerkzeugs nach zumindest einem der vorstehenden Ausführungsformen, bei welchem
- die Formblöcke wiederholt von der geöffneten in die geschlossene Stellung und zurück bewegt werden, um Spritzlinge herzustellen,
- die Position des Kerns in der Kavität anschließend mittels des Führungselements und des Kompensationsmittels geändert wird,
- anschließend die Formblöcke wiederholt von der geöffneten in die geschlossene Stellung und zurück bewegt werden, um weitere Spritzlinge herzustellen.

Mit anderen Worten werden zunächst Spritzlinge mittels eines Spritzgießwerkzeugs hergestellt ohne eine Veränderung der Position des Kerns vorzunehmen. Nachdem eine beliebige Anzahl an Spritzlingen hergestellt wurde, wird z.B. eine Vermessung der Spritzlinge durchgeführt, wobei beispielsweise eine fehlerhafte Form der Spritzlinge entdeckt wird, wobei die fehlerhafte Form eine fehlerhafte bzw. ungleichmäßige Wandstärke umfassen kann, welche von einer Verschiebung oder Verbiegung des Kerns durch den Druck des einspritzenden Kunststoffs verursacht wurde. Anschließend kann die fehlerhafte Form bzw. Wandstärke der (zukünftigen) Spritzlinge korrigiert und bereichsweise angepasst werden, indem die Position des Kerns in der Kavität mittels des Führungselements und des Kompensationsmittels wie oben beschrieben geändert wird.

Die gewünschte Richtung kann dabei durch mehrere Versuche ermittelt werden, bei denen das Führungselement und/oder Kompensationsmittel den Kern in unterschiedliche Richtungen und mit unterschiedlicher Stärke verschieben bis eine optimale Einstellung des Führungselements und/oder Kompensationsmittels erreicht ist. Alternativ kann die optimale Einstellung des Führungselements und/oder Kompensationsmittels auch berechnet werden oder mit jeder anderen geeigneten Methode bestimmt werden. Nachdem die Position des Kerns in der Kavität mittels des Führungselements und des Kompensationsmittels erfolgreich geändert wurde, werden anschließend die Formblöcke wiederholt von der geöffneten in die geschlossene Stellung und zurück bewegt, um weitere Spritzlinge herzustellen. Insbesondere weisen die weiteren Spritzlinge eine korrigiert bzw. gleichmäßige Wandstärke auf. Die Abweichung der Wandstärke an einer Stelle des Spritzlings von einem Wandstärkenmittelwert ist dabei bevorzugt kleiner als ein vorbestimmter Toleranzwert sein. Beispielsweise ist die Abweichung der Wandstärke von einer gewünschten Wandstärke kleiner als 10% und bevorzugt kleiner als 5%.

Gemäß einer weiteren Ausführungsform erfolgt die Änderung der Position des Kerns mittels des Führungselements und die Änderung der Position des Kerns mittels des Kompensationsmittels um den gleichen Versatz und in die gleiche Richtung. Insbesondere kann der Kern parallel verschoben werden, beispielsweise bezüglich seiner Längsachse. Eine Schrägstellung des Kerns oder ein Verbiegen des Kerns können somit unterbleiben. Folglich wirkt auf das Führungselement, das Kompensationsmittel und/oder den Kern keine aus der Verschiebung resultierende Kraft. Trotz der Verschiebung des Kerns erhöht sich der Verschleiß am Führungselement nicht.

Die Änderung der Position des Kerns mittels des Führungselements kann dabei auch separat von der Änderung der Position des Kerns mittels des Kompensationsmittels erfolgen. Führungselement und Kompensationsmittel können mechanisch getrennt ausgebildet sein und insbesondere separat voneinander bedienbar sein. Beispielsweise kann zuerst eine Änderung der Position des Kerns mittels des Führungsmittels erfolgen und anschließend eine Änderung der Position des Kerns mittels des Kompensationsmittels oder andersherum. Die Größe und/oder die Richtung der Änderungen der Position des Kerns mittels des Führungselements und die Größe und/oder die Richtung der Änderung der Position des Kerns mittels des Kompensationsmittels sind aber bevorzugt proportional oder gleich.

Alternativ können das Führungselement und Kompensationsmittel aber auch z.B. mechanisch gekoppelt sein, sodass eine Änderung an einem der beiden Komponenten auch automatisch eine Änderung an der anderen Komponente nach sich zieht. Beispielsweise kann eine Änderung am Führungselement dieselbe Änderung am Kompensationsmittel bewirken und umgekehrt. Dementsprechend kann die Verschiebung des Kerns durch das Führungselement und das Kompensationsmittel eine einheitliche Verschiebung sein.

Ein weiterer Aspekt der vorliegenden Erfindung bezieht sich auf eine Spritzgießmaschine umfassend ein Spritzgießwerkzeug nach einem der vorstehenden Ausführungsformen.

Für das Verfahren und die Spritzgießmaschine gelten die Ausführungsformen zu dem erfindungsgemäßen Spritzgießwerkzeug entsprechend, dies gilt insbesondere hinsichtlich Vorteilen und Ausführungsformen.

Nachfolgend wird die Erfindung rein bespielhaft unter Bezugnahme auf die Zeichnungen dargestellt. Es zeigen:
- Fig. 1: einen seitlichen Querschnitt eines Spritzgießwerkzeugs in geschlossener Stellung;
- Fig. 2: einen seitlichen Querschnitt des Spritzgießwerkzeugs in teilweise geöffneter Stellung;
- Fig. 3: einen seitlichen Querschnitt des Spritzgießwerkzeugs, wobei zwei Kerne und zwei Kavitäten gezeigt sind;
- Fig. 4: eine isometrische Ansicht eines Teils des Spritzgießwerkzeugs.

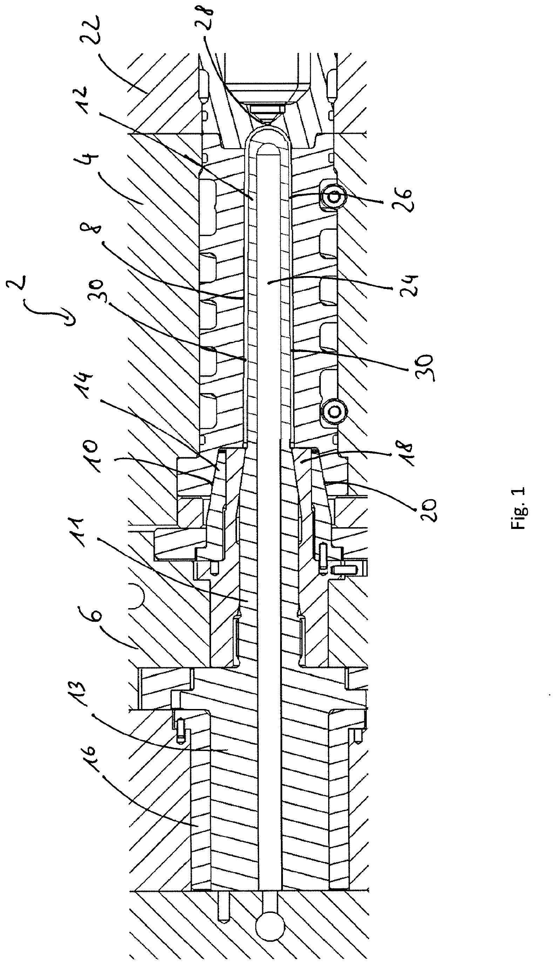

In Fig. 1 ist ein seitlicher Querschnitt eines erfindungsgemäßen Spritzgießwerkzeugs 2 im geschlossenen Zustand dargestellt, welches einen ersten Formblock 4 und einen zweiten Formblock 6 umfasst. Der erste Formblock 4 umfasst eine Kavität 8 und einen Führungsbereich 10, während der zweite Formblock einen Kern 11 umfassend eine Kernspitze 12 und eine Kernbasis 13, ein Führungselement in Form einer ersten Exzenterbuchse 14, ein Kompensationsmittel in Form einer zweiten Exzenterbuchse 16 und eine Abstreiferbuchse 18 umfasst.

Die erste Exzenterbuchse 14 umfasst einen Konus 20, welcher aus zumindest einem Teil der Außen- bzw. Mantelfläche der ersten Exzenterbuchse 14 geformt ist und konisch zuläuft. Auch der Führungsbereich 10 ist konisch zulaufend geformt und insbesondere so ausgebildet, dass er komplementär zu dem Konus 20 der ersten Exzenterbuchse 14 verläuft, d.h. den Konus 20 zumindest teilweise aufnehmen kann.

Der erste Formblock 4 ist an einer Düsenseite 22 des Spritzgießwerkzeugs 2 angeordnet. In dem dargestellten vollständig geschlossenen Zustand des Spritzgießwerkzeugs 2 liegt die erste Exzenterbuchse 14 und insbesondere der Konus 20 an dem Führungsbereich 10 des ersten Formblocks 4 an, sodass der Konus 20 und der Führungsbereich 10 in direktem Kontakt stehen.

Der Kern 11 verläuft durch die erste Exzenterbuchse 14, durch die zweite Exzenterbuchse 16 und durch die Abstreiferbuchse 18 hindurch, wobei die Abstreiferbuchse 18 bereichsweise innerhalb der ersten Exzenterbuchse 14 angeordet ist. Innerhalb des Kerns 11 ist ein Kühlkanal 24 vorgesehen. Der Kern 11 ragt mit der Kernspitze 12 in die Kavität 8 hinein. Dabei bilden der Kern 11 und die Kavität 8 im geschlossenen Zustand einen Formhohlraum 26, in den Kunststoff über eine Einspritzdüse 28 gespritzt wird und in dem ein Spritzling 30 entsteht. Der Spritzling 30 kann im vorliegenden Beispiel ein Probenröhrchen sein.

Im vorliegenden Beispiel wird davon ausgegangen, dass festgestellt wurde, dass die Wandstärkte der Spritzlinge 30 in dem in Fig. 1 oben dargestellten Bereich zu gering ist. Die zu geringe Wandstärke wird durch eine Krafteinwirkung beim Einspritzvorgang verursacht. Aufgrund der beim Einspritzvorgang des Kunststoffs auf die Kernspitze 12 wirkenden Kraft kann sich die Kernspitze 12 jeweils nach oben verschieben bzw. verbiegen, wodurch der Spritzling 30 dann eine ungleichmäßige Wandstärke aufweist (oben zu dünn, unten zu dick).

Wie in Fig. 1 gezeigt, wird dieser ungleichmäßigen Wandstärke des Spritzlings 30 durch eine Verschiebung des Kerns 11 (in Fig. 1 nach unten) entgegengewirkt. Hierzu ist die erste und die zweite Exzenterbuchse 14, 16 jeweils so gedreht worden, dass bei beiden Exzenterbuchsen 14, 16 jeweils im in Fig. 1 oberen Bereich eine erhöhte Materialstärke vorliegt, wohingegen im unteren Bereich in der Querschnittsdarstellung die Materialstärke der Exzenterbuchsen 14, 16 reduziert ist.

Im Ergebnis ist der Kern 11 nach unten verschoben. Der Formhohlraum 26 erscheint in Fig. 1 daher im unteren Bereich schmaler. Beim Einspritzen von Kunststoff in den Formhohlraum 26 wird die Kernspitze 12 dann nach oben verschoben/gebogen, sodass der fertige Spritzling 30 letztlich oben und unten die gleiche Wandstärke aufweist.

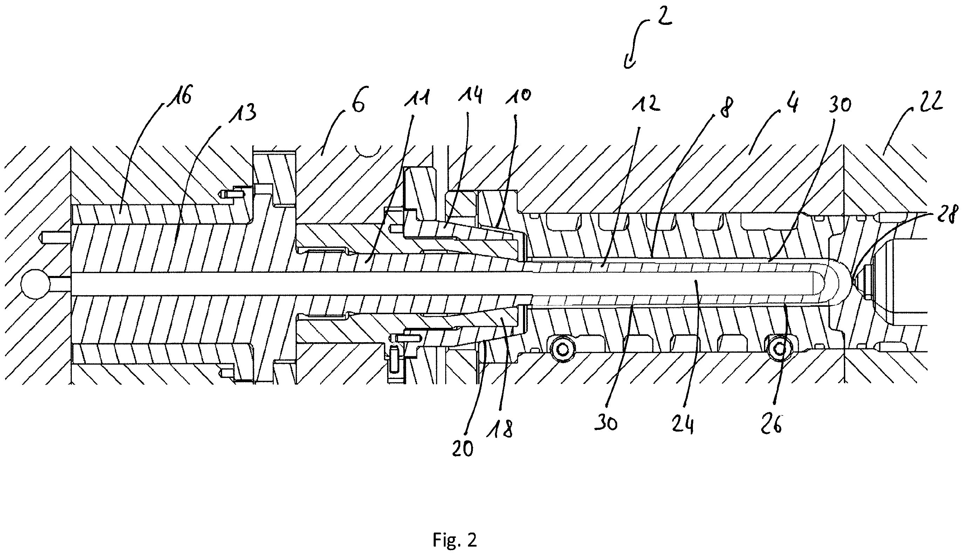

Fig. 2 zeigt das Spritzgießwerkzeug 2 in einer teilweise geöffneten Stellung. Auch hier ist die gewünschte Verschiebung des Kerns 11 nach unten zu erkennen.

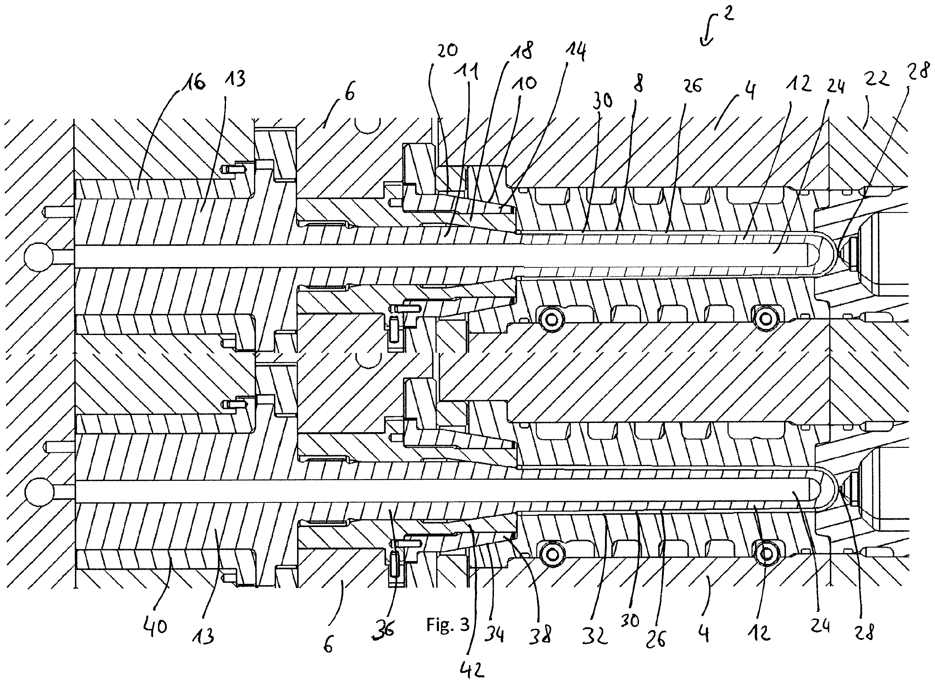

Fig. 3 zeigt das Spritzgießwerkzeug 2, wobei zwei Kerne 11 und zwei Kavitäten 8 dargestellt sind. Der erste Formblock umfasst eine erste Kavität 8, einen ersten Führungsbereich 10, eine zweite Kavität 32 und einen zweiten Führungsbereich 34. Der zweite Formblock hingegen umfasst einen ersten Kern 11, ein erstes Führungselement (d.h. die erste Exzenterbuchse 14), ein erstes Kompensationsmittel (d.h. die zweite Exzenterbuchse 16), eine erste Abstreiferbuchse 18, und einen zweiten Kern 36, ein zweites Führungselement 38 (d.h. eine weitere erste Exzenterbuchse), ein zweites Kompensationsmittel 40 (d.h. eine weitere zweite Exzenterbuchse) und eine zweite Abstreiferbuchse 42.

Die Funktionsweise der einzelnen Komponenten folgt der oben beschriebenen Funktionsweise. Da die ungewünschte Verschiebung des ersten Kerns 11 und des zweiten Kerns 36 beim Einspritzen unabhängig voneinander ist, kann in dem in Fig. 3 dargestellten Aufbau das erste Führungselement 14 unabhängig von dem zweiten Führungselement 38 eingestellt werden und umgekehrt. Dementsprechend kann auch das erste Kompensationsmittel unabhängig von dem zweiten Kompensationsmittel 40 eingestellt werden und umgekehrt. Somit kann eine Position des ersten Kerns 11 und zweiten Kerns 36 unabhängig voneinander eingestellt werden. Im in Fig. 3 gezeigten Beispiel ist nur der erste Kern 11 nach unten versetzt, wohingegen der zweite Kern 36 weiterhin mittig in die zweite Kavität 32 hineinragt.

Es ist zu verstehen, dass auch andere Ausführungsformen mit mehr als 2 Kernen und Kavitäten und den zugehörigen genannten Bauteilen möglich sind.

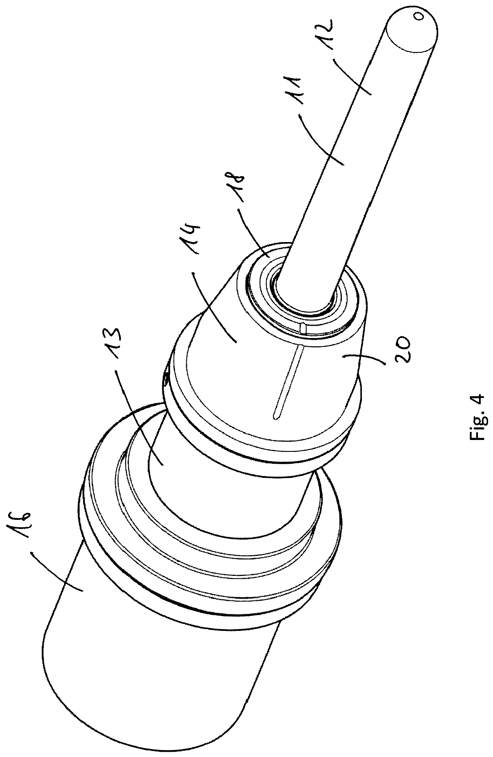

In Fig. 4 ist eine isometrische Ansicht des Kerns 11, der ersten Exzenterbuchse 14, der zweiten Exzenterbuchse 16 und der Abstreiferbuchse 18 gezeigt. Es ist zu erkennen, dass der Kern 11 durch die erste Exzenterbuchse 14 hindurch erstreckt und in die zweite Exzenterbuchse 16 hineinragt. Durch eine Drehung der Exzenterbuchsen 14, 16 ist die Position des Kerns 11 relativ zu der (in Fig. 4 nicht gezeigten) Kavität 8 veränderbar. Die Position des Kerns 11 ist somit ohne großen Aufwand mit nur kurzen Unterbrechungen des Produktionsprozesses veränderbar.

### Liste der Bezuqszeichen

- 2: Spritzgießwerkzeug
- 4: erster Formblock
- 6: zweiter Formblock
- 8: Kavität
- 10: Führungsbereich
- 11: Kern
- 12: Kernspitze
- 13: Kernbasis
- 14: erste Exzenterbuchse
- 16: zweite Exzenterbuchse
- 18: Abstreiferbuchse
- 20: Konus
- 22: Düsenseite
- 24: Kühlkanal
- 26: Formhohlraum
- 28: Einspritzdüse
- 30: Spritzling
- 32: zweite Kavität
- 34: zweiter Führungsbereich
- 36: zweiter Kern
- 38: zweites Führungselement
- 40: zweites Kompensationsmittel
- 42: zweite Abstreiferbuchse

## Patentansprüche

1. Spritzgießwerkzeug (2) für eine Spritzgießmaschine, umfassend:
- zwei Formblöcke (4, 6) mit zumindest einer Kavität (8) in einem ersten Formblock (4), wobei die Formblöcke (4, 6) in eine geöffnete Stellung und eine geschlossene Stellung bewegbar sind,
- zumindest einen Kern (11), welcher an einem zweiten Formblock (6) befestigt ist, wobei der Kern (11) in der geschlossenen Stellung in die Kavität (8) hineinragt, wobei der Kern (11) und die Kavität (8) in der geschlossenen Stellung einen Formhohlraum bilden,
- ein mit dem Kern (11) verbundenes Führungselement (14), welches in der geschlossenen Stellung an dem ersten Formblock (4) anliegt und die Position des Kerns (11) in der Kavität (8) festlegt,
wobei die Position des Kerns (11) in der Kavität (8) in der geschlossenen Stellung mittels des Führungselements (14) veränderbar ist,
ein Kompensationsmittel (16), mittels welchem die Position der Befestigung des Kerns (11) an dem zweiten Formblock (6) an die Position des Kerns (11) in der Kavität (8) anpassbar ist.

2. Spritzgießwerkzeug (2) nach Anspruch 1,
wobei das Führungselement (14) eine erste Exzenterbuchse umfasst, wobei eine Außenfläche der ersten Exzenterbuchse bevorzugt konisch zuläuft.

3. Spritzgießwerkzeug (2) nach Anspruch 1 oder 2,
wobei das Kompensationsmittel (16) eine zweite Exzenterbuchse umfasst.

4. Spritzgießwerkzeug (2) nach zumindest einem der vorstehenden Ansprüche,
wobei die Kavität (8) einen Führungsbereich (10) aufweist und das Führungselement (14) zumindest im geschlossenen Zustand an dem Führungsbereich (10) anliegt.

5. Spritzgießwerkzeug (2) nach zumindest einem der vorstehenden Ansprüche,
wobei der erste Formblock (4) mehrere Kavitäten (8) und der zweite Formblock (6) mehrere Kerne (11) aufweist, wobei jeweils ein Kern (11) in eine Kavität (8) in der geschlossenen Stellung hineinragt und wobei für jeden Kern (11) ein separates mit dem Kern (11) verbundenes Führungselement (14) und ein separates Kompensationsmittel (16) vorgesehen sind.

6. Spritzgießwerkzeug (2) nach zumindest den Ansprüchen 2 bis 4,
wobei das Führungselement (14) eine Abstreiferbuchse (18) aufweist, welche zumindest bereichsweise innerhalb der ersten Exzenterbuchse (14) angeordnet ist, wobei der Führungsbereich (10) konisch zulaufend ausgebildet ist und die erste Exzenterbuchse (14) in der geschlossenen Stellung flächig und umlaufend an dem Führungsbereich (10) anliegt.

7. Spritzgießwerkzeug (2) nach einem der vorstehenden Ansprüche,
wobei der Kern (11) sich im Bereich des Führungselements (14) verjüngt und/oder direkt mit dem Kompensationsmittel (16) und/oder dem Führungselement (14) verbunden ist.

8. Spritzgießwerkzeug (2) nach einem der vorstehenden Ansprüche,
wobei das Führungselement (14) und/oder das Kompensationsmittel (16) drehbar um den Kern (11) sind.

9. Verfahren zum Betrieb eines Spritzgießwerkzeugs (2) nach zumindest einem der vorstehenden Ansprüche, bei welchem
- die Formblöcke (4, 6) wiederholt von der geöffneten in die geschlossene Stellung und zurück bewegt werden, um Spritzlinge (30) herzustellen,
- die Position des Kerns (11) in der Kavität (8) anschließend mittels des Führungselements (14) und des Kompensationsmittels (16) geändert wird
- anschließend die Formblöcke (4, 6) wiederholt von der geöffneten in die geschlossene Stellung und zurück bewegt werden, um weitere Spritzlinge (30) herzustellen.

10. Verfahren nach Anspruch 9,
wobei die Änderung der Position des Kerns (11) mittels des Führungselements (14) und die Änderung der Position des Kerns (11) mittels des Kompensationsmittels (16) um den gleichen Versatz und in die gleiche Richtung erfolgt.

11. Spritzgießmaschine umfassend ein Spritzgießwerkzeug (2) nach einem der Ansprüche 1 bis 8.
